# EUROPÄISCHE PATENTSCHRIFT

(11) **EP 0 610 803 B1**
(45) Veröffentlichungstag und Bekanntmachung des Hinweises auf die Patenterteilung: **27.08.1997**
(21) Anmeldenummer: 94101598.4
(22) Anmeldetag: 03.02.1994
(51) Int. Cl.: B60H 1/22, B60H 1/00, B60H 3/02

(54) **Verfahren und Einrichtung zum Heizen des Fahrgastraumes eines Kraftfahrzeuges**
Process and device for heating the interior of a motor vehicle
Procédé et dispositif pour le chauffage de l'habitacle d'un véhicule automobile

(30) Priorität: 11.02.1993 DE 4304076
(43) Veröffentlichungstag der Anmeldung: 17.08.1994
(73) Patentinhaber: Behr GmbH & Co., D-70469 Stuttgart (DE); MERCEDES-BENZ AG, 70327 Stuttgart (DE)
(72) Erfinder: Khelifa, Noureddine, Dr., D-70439 Stuttgart (DE); Krumbach, Karl-Gerd, D-71576 Burgstetten (DE); Löhle, Michael, Dr., D-73732 Esslingen (DE); Abersfelder, Günter, Dr., D-71065 Sindelfingen (DE); Grantz, Helmut, Dipl.-Ing., D-71067 Sindelfingen (DE); Odebrecht, Wolfgang, Dipl.-Ing., D-71067 Sindelfingen (DE); Wertenbach, Jürgen, Dipl.-Ing., D-70734 Fellbach (DE); Wagner, Oliver, Dipl.-Ing., D-70794 Filderstadt (DE)
(74) Vertreter: Wasmuth, Rolf, Dipl.-Ing.

(56) Entgegenhaltungen:
- EP-A- 0 515 865
- FR-A- 2 682 327
- PATENT ABSTRACTS OF JAPAN vol. 8, no. 186 (M-320)(1623) 25. August 1984 & JP-A-59 077 916 (SEKISUI KAGAKU KOGYO K.K.) 4. Mai 1984
- PATENT ABSTRACTS OF JAPAN vol. 6, no. 33 (M-114)(911) 27. Februar 1982 & JP-A-56 149 205 (NISSAN JIDOSHA) 19. November 1981

## Beschreibung

Die Erfindung betrifft ein Verfahren zum Heizen des Fahrgastraumes in einem Kraftfahrzeug, insbesondere einem Elektro-Fahrzeug nach dem Oberbegriff des Anspruches 1 sowie einer Einrichtung zur Durchführung des Verfahrens nach dem Oberbegriff des Anspruches 6.

Bei Kraftfahrzeugen mit einem Verbrennungsmotor wird zum Heizen die Abwärme des Motors genutzt, so daß unter meist allen auftretenden Betriebsbedingungen ausreichend Wärmeenergie zur Verfügung steht. Bei feuchter oder feuchtkalter Witterung kann zwar durch entsprechend starke Aufheizung des Fahrgastinnenraumes ein Beschlagen der Scheiben meist verhindert werden, jedoch steht die dazu notwendige Heizenergie erst nach längerer Betriebszeit des Motors zur Verfügung; unmittelbar nach dem Start des Verbrennungsmotors ist daher ein Beschlagen der Scheiben mit sehr tiefen Außentemperaturen einhergehender Vereisung oft nicht zu vermeiden. Dennoch wird oft das Fahrzeug in Gang gesetzt, ohne daß auf die erhebliche Sichtbehinderung und die damit einhergehende Betriebsgefährdung Rücksicht genommen wird. Gerade bei Elektro- Fahrzeugen, bei denen nur eine geringe Abwärme zur Aufheizung des Fahrgastinnenraumes zur Verfügung steht, stellt das innere Beschlagen und gegebenenfalls innere Vereisen der Scheiben ein erhebliches, die Verkehrssicherheit beeinträchtigendes Problem dar. Zwar ist durch Zuschaltung entsprechender elektrischer Heizeinrichtungen eine raschere Aufheizung des Fahrgastraumes möglich, hierbei wird jedoch eine erhebliche Menge elektrischer Energie benötigt, was die Batterien entsprechend belastet und zu einer starken Einschränkung der Fahrzeugreichweite führen kann. Gerade im Winterbetrieb, bei dem durch Kälte die Leistungsfähigkeit der Batterien ohnehin eingeschränkt ist, schränkt eine notwendige Aufheizung des Fahrgastinnenraumes die Einsatzfähigkeit eines Elektro-Fahrzeuges nachteilig ein.

Der Erfindung liegt die Aufgabe zugrunde, ein Verfahren zum Heizen eines Fahrgastraumes anzugeben, bei dem mit nur geringer Heizleistung ein inneres Beschlagen der Scheiben des Fahrgastraumes vermieden ist. Ferner soll eine Einrichtung zur Durchführung des Verfahrens angegeben werden.

Die Aufgabe wird erfindungsgemäß nach den Merkmalen des Anspruches 1 gelöst. Eine Einrichtung zur Durchführung des Verfahrens ist im Anspruch 6 angegeben.

Über die Heizvorrichtung wird ein aus dem Fahrgastraum abgezogener Luftstrom aufgeheizt und über den Zuluftkanal in den Fahrgastraum zurückgeführt. Die Aufheizung der Umluft benötigt nur geringe Energie, wobei ein Teilluftstrom der Umluft vor Eintritt in den Fahrgastraum ein Sorbens wie Zeolith, Silicagel oder dergleichen durchströmt und die im Teilluftstrom enthaltene Feuchtigkeit adsorbiert wird. Die dabei freiwerdende Reaktionswärme wird vom Teilluftstrom aufgenommen, so daß der Teilluftstrom - auch ohne Durchströmen der Heizvorrichtung - aufgeheizt wird. Bevorzugt wird der Teilluftstrom vor der Heizvorrichtung in den Abluftkanal zurückgeführt.

Entsprechend der Einrichtung nach Anspruch 6 ist der den Teilluftstrom führende Trocknungskanal über einen Teil seines Strömungsweges vollständig mit dem Sorbens aufgefüllt. Insbesondere weist der Trocknungskanal eine das Sorbens enthaltende Kammer mit einem vorgegebenen Aufnahmevolumen auf.

Weitere Merkmale der Erfindung ergeben sich aus den weiteren Ansprüchen, der Beschreibung und der Zeichnung, in der nachfolgend im einzelnen beschriebenen Ausführungsbeispiele der Erfindung dargestellt sind. Es zeigen:
- Fig. 1: ein Schemabild einer Einrichtung zum Heizen eines Fahrgastraumes mit einem Gebläse,
- Fig. 2: ein Schemabild der Einrichtung nach Fig. 1 im Desorptionsmodus,
- Fig. 3: ein Schemabild eines weiteren Ausführungsbeispiels einer Einrichtung gem. Fig. 1 mit zwei Gebläsen,
- Fig. 4: ein Schemabild der Einrichtung nach Fig. 3 im Desorptionsmodus.

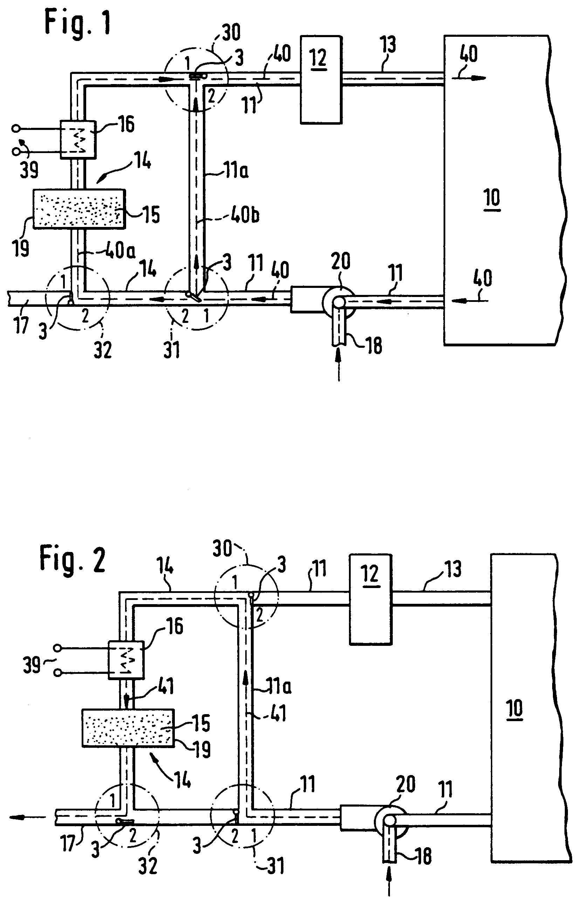

In der in Fig. 1 schematisch dargestellten Einrichtung ist an einen Fahrgastraum 10 eines Kraftfahrzeuges, insbesondere eines Elektro-Fahrzeuges ein Abluftkanal 11 und ein Zuluftkanal 13 angeschlossen. Der Abluftkanal 11 ist über eine Heizvorrichtung 12 mit dem Zuluftkanal 13 verbunden, wobei im Ausführungsbeispiel gemäß Fig. 1 im Abluftkanal ein Gebläse 20 angeordnet ist. Vorteilhaft ist an dem Gebläse ein Frischluftkanal 18 angeschlossen, so daß eine vorgebbare Frischluftmenge zusammen mit dem Abluftstrom 40 vom Gebläse 20 gefördert werden kann.

Parallel zu einem Teilabschnitt 11a des Abluftkanales 11 liegt ein Trocknungskanal 14, der bevorzugt über Luftstromsteuerelemente 30 und 31 an den Abluftkanal 11 angeschlossen ist. Der Trocknungskanal 14 ist an eine Kammer 19 angeschlossen, welche über den gesamten Strömungsquerschnitt mit einem Sorbens 15 aufgefüllt ist, z. B. Zeolith oder Silicagel.

Zur Aufheizung und/oder Entfeuchtung der Luft im Fahrgastraum 10 wird über den Abluftkanal 11 mittels des Gebläses 20 aus dem Fahrgastraum 10 ein Luftstrom 40 zur Heizvorrichtung 12 gefördert, dort aufgeheizt und über den Zuluftkanal 13 in den Fahrgastraum 10 zurückgeführt. Da der Luftstrom bevorzugt ein Umluftstrom ist, ist die zur Aufheizung des Fahrgastraumes 10 benötigte Wärmemenge geringer, als wenn ein reiner Frischluftstrom zugeführt wird, was zweckmäßig sein kann. Die Heizvorrichtung 12 kann ein Abgaswärmetauscher, ein vom Kühlwasser des Motors durchströmter Wärmetauscher oder auch - bei Elektro-Fahrzeugen - eine elektrische Heizvorrichtung sein. Die Heizvorrichtung 12 kann auch die Abwärme des Antriebs bzw. der Batterien des Elektro-Fahrzeuges ausnutzen.

Die Klappe 3 des Luftstromsteuerelementes 31 steht derart, daß ein Teilluftstrom 40a von dem im Abluftkanal 11 geführten Abluftstrom 40 abgezweigt wird und in den Trocknungskanal 14 eintritt. Der Teilluftstrom durchströmt das in der Kammer 19 bevorzugt aufgeschüttete Sorbens 15, wobei die im Teilluftstrom 40a enthaltene Feuchtigkeit adsorbiert wird. Die bei der Adsorption frei werdende Reaktionswärme wird vom Teilluftstrom 40a weitgehend aufgenommen, so daß dieser erwärmt über das Luftstromsteuerelement 30, dessen Klappe 3 in Stellung "1" steht, in den Abluftkanal 11 wieder eintritt. Bevorzugt vereinigen sich der aus dem Trocknungskanal 14 austretende Teilluftstrom 40a sowie der Restluftstrom 40b aus dem Kanalabschnitt 11a vor der Heizvorrichtung 12, wodurch das Temperaturniveau des Gesamtluftstroms 40 vor Eintritt in die Heizvorrichtung 12 angehoben wird. Die letztendlich in der Heizvorrichtung noch benötigte Wärmemenge zur Aufheizung auf die gewünschte Temperatur kann so minimiert werden.

Da der in den Fahrgastraum 10 eintretende Luftstrom 40 entfeuchtet ist, wird ein Beschlagen der Scheiben des Fahrgastraumes vermieden, ohne daß eine erhebliche Heizenergie eingebracht werden muß. Um eine rasche Entfeuchtung zu gewährleisten, kann die Klappe 3 des Luftstromsteuerelementes 31 für eine vorgebbare Zeitspanne auch derart eingestellt werden, daß der Kanalabschnitt 11a gesperrt ist, so daß der gesamte Luftstrom 40 durch das Sorbens 15 strömt und entfeuchtet wird. Durch Einstellung der Klappe 3 des Luftstromsteuerelementes 31 kann der Fahrer des Kraftfahrzeuges die gewünschte Entfeuchtung des Fahrgastraumes 10 einstellen. In der Praxis hat sich gezeigt, daß zur Entfeuchtung nur geringe Mengen Sorbens notwendig sind, so daß die Kammer 19 ein nur geringes Volumen von zum Beispiel 4 Litern aufweisen muß. Auch bei nur geringem Einbauraum ist der Einsatz einer derartigen Einrichtung möglich.

Werden die Klappen 3 der Luftstromsteuerelemente 30, 31 und 32 in die Stellung "2" umgeschaltet (Fig. 2), kann ein bevorzugt über den Frischluftkanal 18 eintretender Frischluftstrom vom Gebläse 20 über den Kanalabschnitt 11a und das Luftstromsteuerelement 30 in den Brückenkanal 14 eintreten. In Strömungsrichtung vor der Kammer 19 ist im Brückenkanal eine Heizvorrichtung 16 angeordnet, die bevorzugt eine elektrische PTC Heizvorrichtung ist und beim Aufladen der Batterien eines Elektro- Fahrzeuges an eine 220 Volt Spannungsquelle 39 anzuschließen ist. Die Heizvorrichtung 16 heizt den Luftstrom 41 vor Eintritt in die Kammer 19 auf, so daß das Sorbens 15 durch die eintretende Warmluft adiabatisch desorbiert wird. Der die Feuchtigkeit aus dem Sorbens 15 austragende Luftstrom 41 wird über einen Fortluftstutzen 17 abgeführt, welcher über das Luftstromsteuerelement 32 an dem Trocknungskanal 14 stromab der Kammer 19 angeschlossen ist. Es hat sich gezeigt, daß eine Desorption einer etwa 4 Liter fassenden Reaktionskammer 19 - abhängig von verschiedenen Parametern - nur etwa 20 bis 60 Minuten in Anspruch nimmt. Das Volumen der Kammer 19 ist ausreichend, den Fahrgastraum 10 über einen Zeitraum von ca. 2 Stunden wirkungsvoll zu entfeuchten. Wird als Sorbens ein Zeolith genutzt, ist eine Desorption mit einer Temperatur von ca. 120° zweckmäßig; bei einer derartigen Temperatur sollte die Kammer 19 aus einem Metall, bevorzugt Aluminium, bestehen. Wird Silicagel als Sorbens verwendet, ist eine Desorption mit Temperaturen um 80° ausreichend, so daß die Kammer 19, ebenso wie die Luftleitkanäle, aus Kunststoff bestehen kann.

Nach der Desorptionsphase (Fig. 2) werden die Luftstromsteuerelemente 30 und 32 in die Stellung "1" zurückgeschaltet, so daß in Abhängigkeit der Stellung der Klappe 3 des Luftstromsteuerelementes 31 ein Teilluftstrom 40a vorgebbarer Menge über den Trocknungskanal 14 der Kammer 19 zur Entfeuchtung zugeführt werden kann. In der Desorptionsphase (Fig. 2) strömt der Luftstrom 41 durch das Sorbens in Gegenrichtung zum Teilluftstrom 40a in der Adsorptionsphase (Fig. 1).

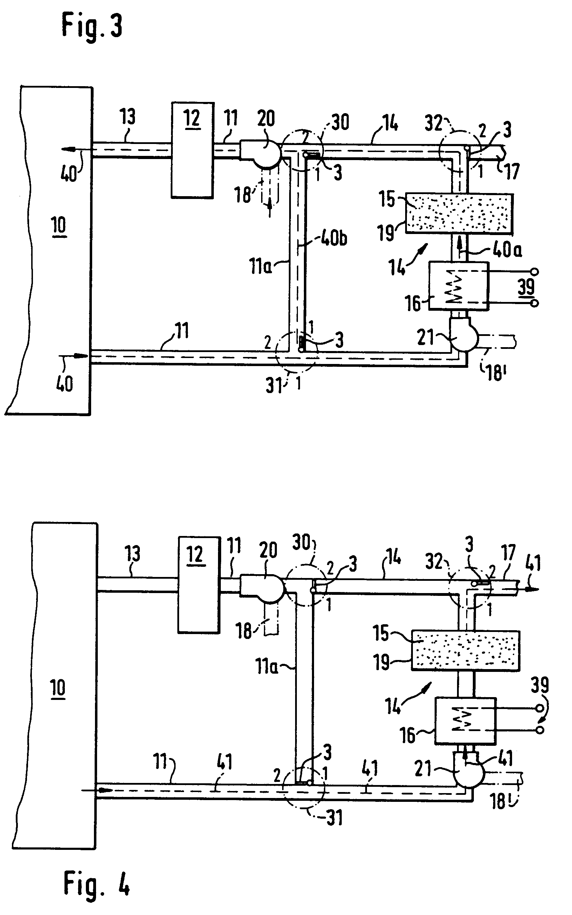

Bei einem anderen Ausführungsbeispiel der Erfindung ist die Heizvorrichtung 16 im Trocknungskanal 14 in Strömungsrichtung des Teilluftstroms 40a (Fig. 3) stromauf der Kammer 19 angeordnet, während der Fortluftkanal 17 stromab der Kammer 19 über das Luftstromsteuerelement 32 angeschlossen ist. Stromauf der Heizvorrichtung 16 ist ein weiteres Gebläse 21 angeordnet, welches den Teilluftstrom 40a fördert. Über die Drehzahl des Gebläses 21 kann die Menge des Teilluftstroms eingestellt werden. Die Drehzahlsteuerung erfolgt bevorzugt über ein - nicht dargstelltes - elektronisches Drehzahlstellglied, welches in Abhängigkeit des Ausgangssignals eines im Fahrgastraum 10 angeordneten Feuchtsensors arbeitet.

Während des Heizbetriebes der Einrichtung gem. Fig. 3 saugt über den Abluftkanal 11 das zwischen dem Luftstromsteuerelement 30 und der Heizvorrichtung 12 angeordnete Gebläse 20 den Luftstrom 40 an. Wie auch im Ausführungsbeispiel nach den Fig. 1 und 2 kann an das Gebläse 20 ein Frischluftkanal 18 zur Zuführung von Frischluft in vorgebbarer Menge angeschlossen sein. Der Luftstrom 40 tritt in die Heizvorrichtung 12 ein, wird aufgeheizt und über den Zuluftkanal 13 dem Fahrgastraum 10 zugeführt.

Die Klappe 3 des Luftstromsteuerelementes 31 steht in Stellung "1" und gibt sowohl den Kanal 11a wie den Trocknungskanal 14 über den gesamten Querschnitt frei. Der abgezweigte Teilluftstrom 40a wird in seiner Menge durch die Drehzahl des Gebläses 21 bestimmt. Es kann vorteilhaft sein, an das Gebläse 21 ein Frischluftkanal anzuschließen, über den in vorgebbarer Menge Frischluft zuführbar ist. Nach Durchströmen des Sorbens 15 in der Kammer 19 vereinigt sich der Teilluftstrom 40a mit dem Restluftstrom 40b am Luftstromsteuerelement 30, dessen Klappe 3 in Stellung "1" steht. Der Gesamtluftstrom 40 wird dann in der beschriebenen Weise dem Gebläse 20 vor der Heizvorrichtung 12 zugeführt.

Zur Desorption des Sorbens 15 wird von dem Gebläse 21 ein Luftstrom 41 aus dem Fahrgastraum 10 oder über einen Frischluftkanal 18' aus der Umgebung angesaugt und der - insbesondere elektrischen - Heizvorrichtung 16 im Trocknungskanal 14 zugeführt. Der der Heizvorrichtung 16 zugeführte Luftstrom 41 kann auch ein Mischluftstrom sein. Der erhitzte Luftstrom tritt in die Kammer 19 ein, nimmt das im Sorbens gebunde Wasser auf und kühlt dabei ab. Der feuchte Luftstrom 41 wird über das in Stellung "2" stehende Luftstromsteuerelement 32 und den Fortluftstutzen 17 abgeführt.

## Patentansprüche

1. Verfahren zum Heizen des Fahrgastraumes (10) in einem Kraftfahrzeug, insbesondere in einem Elektro-Fahrzeug, mit einer Heizvorrichtung (12), der ein über einen Abluftkanal (11) aus dem Fahrgastraum (10) abgezogener Luftstrom zugeführt ist und der von der Heizvorrichtung (12) über einen Zuluftkanal (13) in den Fahrgastraum (10) eintritt,
dadurch gekennzeichnet, daß zur Entfeuchtung des Fahrgastraumes (10) zumindest ein, in der Menge einstellbarer, vom Luftstrom (40) abgezweigter Teilluftstrom (40a) vor Eintritt in den Fahrgastraum (10) ein Sorbens (15) wie Zeolith oder dergleichen durchströmt.

2. Verfahren nach Anspruch 1,
dadurch gekennzeichnet, daß der Teilluftstrom (40a) vor der Heizvorrichtung (12) aus dem Abluftkanal (11) abgezweigt wird.

3. Verfahren nach Anspruch 1 oder 2,
dadurch gekennzeichnet, daß der Teilluftstrom (40a) vor der Heizvorrichtung (12) in den Abluftkanal (11) zurückgeführt ist.

4. Verfahren nach einem der Ansprüche 1 bis 3,
dadurch gekennzeichnet, daß dem Luftstrom (40) vor Abzweigung des Teilluftstroms (40a) eine vorgebbare Frischluftmenge zugeführt ist.

5. Verfahren nach einem der Ansprüche 1 bis 4,
dadurch gekennzeichnet, daß der Teilluftstrom (40a) und der Luftstrom (40) jeweils von einem Gebläse (20, 21) gefördert wird.

6. Einrichtung zur Durchführung des Verfahrens nach einem der Ansprüche 1 bis 5, wobei die Heizvorrichtung (12) über einen den Luftstrom (40) zuführenden Zuluftkanal (11) und über einen den Luftstrom (40) abführenden Abluftkanal (13) mit dem Fahrgastraum (10) verbunden ist,
dadurch gekennzeichnet, daß parallel zu einem Kanalabschnitt (11a) über Luftstromsteuerelemente (30, 31) ein Trocknungskanal (14) angeschlossen ist, der über einen Teil seines Strömungsweges vollständig mit einem Sorbens (15) wie Zeolith oder dergleichen aufgefüllt ist.

7. Einrichtung nach Anspruch 6,
dadurch gekennzeichnet, daß der Trocknungskanal (14) eine das Sorbens (15) enthaltende, mit einem vorgebbaren Aufnahmevolumen ausgebildete Kammer (19) aufweist.

8. Einrichtung nach Anspruch 6 oder 7,
dadurch gekennzeichnet, daß in dem Trocknungskanal (14) - bezogen auf den Teilluftstrom (40a) - vorzugsweise stromauf der Kammer (19) über ein Luftstromsteuerelement (32) ein Fortluftkanal (17) mündet und in den Trocknungskanal (14) - vorzugsweise stromab der Kammer - eine Heizvorrichtung (16) angeordnet ist.

9. Einrichtung nach einem der Ansprüche 6 bis 8,
dadurch gekennzeichnet, daß der Trocknungskanal (14) parallel zu einem Kanalabschnitt (11a) des Abluftkanals (11) liegt.

10. Einrichtung nach einem der Ansprüche 6 bis 9,
dadurch gekennzeichnet, daß zwischen dem Fahrgastraum (10) und dem Luftstromsteuerelement (31) zum Anschluß des Trocknungskanals (14) in dem Abluftkanal (11) ein Gebläse (20) angeordnet ist.

11. Einrichtung nach einem der Ansprüche 6 bis 9,
dadurch gekennzeichnet, daß unmittelbar stromauf der Heizvorrichtung (12) im Abluftkanal (11) ein Gebläse (20) angeordnet ist.

12. Einrichtung nach einem der Ansprüche 6 bis 9,
dadurch gekennzeichnet, daß im Trocknungskanal (14) vorzugsweise stromauf der Kammer (19) ein Gebläse (21) angeordnet ist.

13. Einrichtung nach einem der Ansprüche 10 bis 12,
dadurch gekennzeichnet, daß an das Gebläse (20) zusätzlich ein Frischluftkanal (18) angeschlossen ist.

## Claims

1. Method of heating the passenger compartment (10) in a motor vehicle, especially an electric vehicle, having a heating device (12) to which there is supplied via an air outlet duct (11) an air stream which has been drawn out of the passenger compartment (10) and which enters the passenger compartment (10) from the heating device (12) via an air inlet duct (13), characterised in that, in order to dehumidify the passenger compartment (10), at least one partial air stream (40a) of adjustable quantity, which has been branched off from the air stream (40), flows through a sorbent (15), such as zeolite or the like, before entering the passenger compartment (10).

2. Method according to claim 1, characterised in that the partial air stream (40a) is branched off from the air outlet duct (11) before the heating device (12).

3. Method according to claim 1 or 2, characterised in that the partial air stream (40a) is returned to the air outlet duct (11) before the heating device (12).

4. Method according to any one of claims 1 to 3, characterised in that a predeterminable quantity of fresh air is supplied to the air stream (40) before the partial air stream (40a) is branched off.

5. Method according to any one of claims 1 to 4, characterised in that the partial air stream (40a) and the air stream (40) are in each case conveyed by a fan (20, 21).

6. Apparatus for carrying out the method according to any one of claims 1 to 5, wherein the heating device (12) is connected to the passenger compartment (10) via an air inlet duct (11) which supplies the air stream (40) and via an air outlet duct (13) which removes the air stream (40), characterised in that, parallel to a duct section (11a), a drying duct (14) is connected via air stream control elements (30, 31), which drying duct (14) is completely filled with a sorbent (15), such as zeolite or the like, over a portion of its flow path.

7. Apparatus according to claim 6, characterised in that the drying duct (14) has a chamber (19) of predeterminable receiving capacity which contains the sorbent (15).

8. Apparatus according to claim 6 or 7, characterised in that an air discharge duct (17) opens into the drying duct (14), via an air stream control element (32), preferably upstream of the chamber (19) in relation to the partial air stream (40a), and a heating device (16) is arranged in the drying duct (14), preferably downstream of the chamber in relation to the partial air stream (40a).

9. Apparatus according to any one of claims 6 to 8, characterised in that the drying duct (14) is arranged parallel to a duct section (11a) of the air outlet duct (11).

10. Apparatus according to any one of claims 6 to 9, characterised in that a fan (20) is arranged in the air outlet duct (11), between the passenger compartment (10) and the air stream control element (31) for connecting the drying duct (14).

11. Apparatus according to any one of claims 6 to 9, characterised in that a fan (20) is arranged in the air outlet duct (11) immediately upstream of the heating device (12).

12. Apparatus according to any one of claims 6 to 9, characterised in that a fan (21) is arranged in the drying duct (14), preferably upstream of the chamber (19).

13. Apparatus according to any one of claims 10 to 12, characterised in that a fresh-air duct (18) is additionally connected to the fan (20).

## Revendications

1. Procédé pour réchauffer l'habitacle (10) d'un véhicule automobile, en particulier d'un véhicule électrique, avec un dispositif de chauffage (12), jusqu'auquel est amené un courant d'air extrait de l'habitacle (10) à travers un conduit d'évacuation d'air (11) et qui entre depuis le dispositif de chauffage (12) à travers un conduit d'amenée d'air (13) dans l'habitacle (10), caractérisé en ce que, pour la déshumidification de l'habitacle (10), un courant d'air partiel (40a) de quantité réglable, dérivé du courant d'air (40), traverse un sorbant (15), comme de la zéolite ou similaire, avant d'entrer dans l'habitacle (10).

2. Procédé selon la revendication 1, caractérisé en ce que le courant d'air partiel (40a) est dérivé avant le dispositif de chauffage (12) à partir du conduit d'évacuation d'air (11).

3. Procédé selon la revendication 1 ou 2, caractérisé en ce que le courant d'air partiel (40a) est ramené dans le conduit d'évacuation d'air (11) avant le dispositif de chauffage (12).

4. Procédé selon l'une quelconque des revendications 1 à 3, caractérisé en ce que le courant d'air (40) reçoit une quantité prédéfinissable d'air frais avant la dérivation du courant d'air partiel (40a).

5. Procédé selon l'une quelconque des revendications 1 à 4, caractérisé en ce que le courant d'air partiel (40a) et le courant d'air (40) sont respectivement déplacés par un ventilateur (20, 21).

6. Dispositif pour réaliser le procédé selon l'une quelconque des revendications 1 à 5, dans lequel le dispositif de chauffage (12) est relié à l'habitacle (10) à travers un conduit d'amenée d'air (11) amenant le courant d'air (40) et un conduit d'évacuation d'air (13) évacuant le courant d'air (40), caractérisé en ce qu'en parallèle à un tronçon de conduit (11a), un conduit de séchage (14) est raccordé par l'intermédiaire d'éléments d'orientation de courant d'air (30, 31), conduit qui est rempli, sur une partie de son chemin d'écoulement, avec un sorbant (15), comme de la zéolite ou similaire.

7. Dispositif selon la revendication 6, caractérisé en ce que le conduit de séchage (14) présente une chambre (19) d'un volume d'absorption prédéfinissable contenant le sorbant (15).

8. Dispositif selon la revendication 6 ou 7, caractérisé en ce qu'un conduit d'air d'échappement (17) aboutit dans le conduit de séchage (14) - par rapport au courant d'air partiel (40a) - de préférence en amont de la chambre (19) à travers un élément d'orientation de courant d'air (32), et en ce qu'un dispositif de chauffage (16) est disposé dans le conduit de séchage (14) - de préférence en aval de la chambre.

9. Dispositif selon l'une quelconque des revendications 6 à 8, caractérisé en ce que le conduit de séchage (14) se trouve en parallèle à un tronçon de conduit (11a) du conduit d'évacuation d'air (11).

10. Dispositif selon l'une quelconque des revendications 6 à 9, caractérisé en ce qu'un ventilateur (20) est disposé entre l'habitacle (10) et l'élément d'orientation de courant d'air (31) pour le raccordement du conduit de séchage (14) au conduit d'évacuation d'air (11).

11. Dispositif selon l'une quelconque des revendications 6 à 9, caractérisé en ce qu'un ventilateur (20) est disposé immédiatement en amont du dispositif de chauffage (12) dans le conduit d'évacuation d'air (11).

12. Dispositif selon l'une quelconque des revendications 6 à 9, caractérisé en ce qu'un ventilateur (21) est disposé dans le conduit de séchage (14), de préférence en amont de la chambre (19).

13. Dispositif selon l'une quelconque des revendications 10 à 12, caractérisé en ce qu'un conduit d'air frais (18) est de plus raccordé au ventilateur (20).
